(19) Europäisches Patentamt

European Patent Office

Office européen des brevets

(11) **EP 2 101 180 A1**

(12) **EUROPEAN PATENT APPLICATION**

(43) Date of publication:
**16.09.2009 Bulletin 2009/38**

(51) Int Cl.:
**G01P 15/12** *(2006.01)*　　**G01P 15/125** *(2006.01)*
**G01P 15/18** *(2006.01)*　　**G01P 21/00** *(2006.01)*

(21) Application number: **08152523.0**

(22) Date of filing: **10.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **EM Microelectronic-Marin SA**
**2074 Marin (CH)**

(72) Inventor: **Stastny, Jakub**
**10 10100, Praha (CZ)**

(74) Representative: **Ravenel, Thierry Gérard Louis et al**
**I C B**
**Ingénieurs Conseils en Brevets**
**7, rue des Sors**
**2074 Marin (CH)**

(54) **Multi-axial accelerometer**

(57)　The present invention is directed to a sensor device for measuring an acceleration along at least two axes comprising a first sensor (10) measuring an acceleration along a first axis, a second sensor (20) measuring an acceleration along a second axis, and an analog/digital converter (50). The device furthermore comprises means (40) for sequentially selecting an output value of either of these sensors to be transmitted to said analog/digital converter and means for calculating an acceleration magnitude. To eliminate the error induced by sequential sampling, the device further comprises filtering means (70) which filter a digital signal output by the analog/digital converter and which are adapted to compensate the error induced by the time shift between the output values being transmitted from the first and the second sensor, respectively.

# Fig. 2

**Description**

The present invention is related to a sensor device for measuring an acceleration, i.e. an accelerometer, and more specifically to a sensor device according to the preamble of claim 1 which is capable of measuring acceleration along at least two mutually orthogonal axes.

Capacitive or piezoresistive sensors for measuring a force along an axis and thereby an acceleration along said axis are well known in the art. The object of the present invention is not the sensor itself, however, as the invention can be used with any type of acceleration sensor. The sensor itself will thus not be described in detail in the present application.

In many applications it is desired to measure the acceleration of an object, for example a vehicle, not only along one single axis but in a plane or in space and thus in two or three dimensions.

A very simple solution to measure an acceleration in two or three dimensions is to use two or three separate single-axis accelerometers, each of them having a different orientation and thus measuring the acceleration along a different axis, the axes being mutually orthogonal. These two or three accelerometers are then mounted on a common support.

In many applications one wants to know the magnitude of the acceleration, which can be calculated from the values $a_x$, $a_y$, $a_z$ corresponding to the acceleration along three mutually orthogonal axes x, y, z, respectively using the following equation:

$$a_{magnitude} = \sqrt{a_x^{\,2} + a_y^{\,2} + a_z^{\,2}}$$

Other values which might be calculated using the three acceleration signals $a_x$, $a_y$, $a_z$ include the velocity magnitude or a resulting movement.

A sensor device according to the preamble of claim 1 is already known from prior art and comprises a first sensor measuring an acceleration along a first axis, a second sensor measuring an acceleration along a second axis, and an analog/digital converter. Furthermore, the device comprises means for sequentially selecting an output value of either of these sensors to be transmitted to said analog/digital converter. Finally the device has data processing means for calculating a desired output combining the output values provided by the different mono-axial sensors, such as an acceleration magnitude.

The use of only one common analog-digital converter for the output acceleration signals provided by the sensors is quite common and has the advantage of limiting the necessary space and the cost of the device. However, the accuracy of the resulting values provided by these devices is not completely satisfying and a complex and costly post-processing of the acquired data is necessary before an acceleration magnitude or any other value provided by the device can be used.

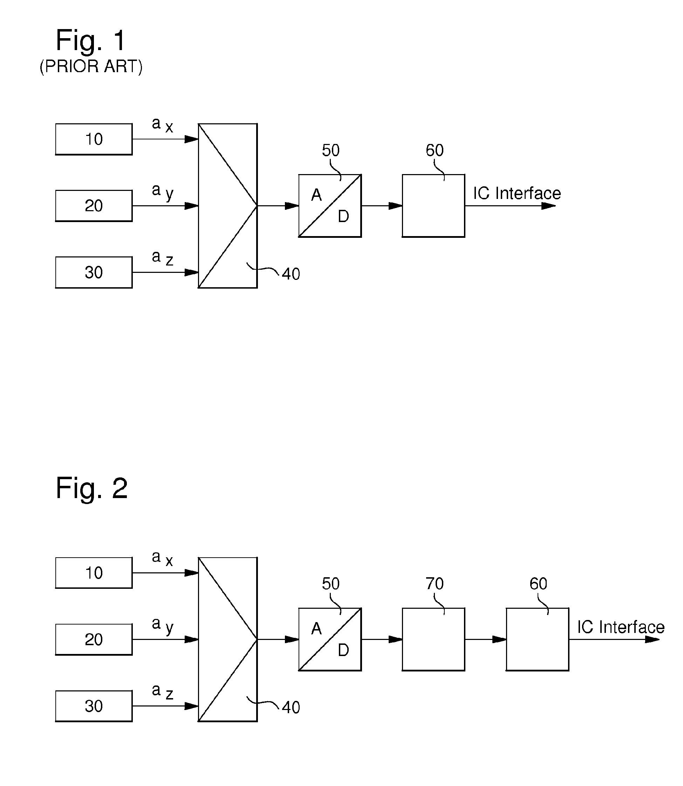

An example of a sensor device according to the preamble of claim 1 which allows the calculation of an acceleration magnitude from three one-dimensional acceleration signals is shown schematically in Fig. 1 and will be described in detail below.

A first sensor 10 measures an acceleration $a_x$ along a first axis x, a second sensor 20 measures an acceleration $a_y$ along a second axis y, and a third sensor 30 measures an acceleration $a_z$ along a third axis z. To reduce the number of electronic components to be used, only one analog/digital converter 50 is used to sample the acceleration signals. Means 40 sequentially select an output value of either of these sensors 10, 20, 30 to be transmitted to said analog/digital converter 50. The digital signals which are output by the analog/digital converter can then be used by data processing means 60 for calculating an acceleration magnitude and/or a velocity magnitude or other values. The calculated value, for example the acceleration magnitude $a_{magnitude}$, can then be transmitted to an integrated circuit via an appropriate interface.

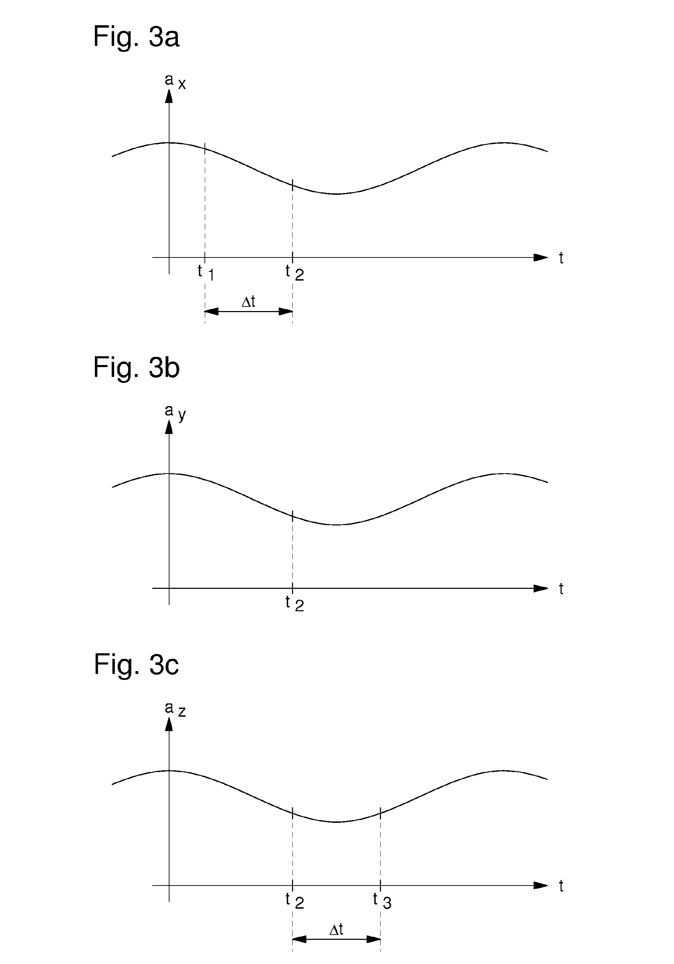

The lack of accuracy of the results provided by the device which has been mentioned above is in part due to a systematic error introduced by the sequential sampling, as illustrated in Figs. 3a to 3c.

Fig. 3a shows the acceleration $a_x$ along a first axis x over time. As outlined above, means 40 sequentially sample the acceleration signals $a_x$, $a_y$, and $a_z$. Between the acquisition of the respective acceleration signals lies thus a time shift $\Delta t$ which depends on the sampling rate of means 40. As shown in Fig. 3a, at a moment $t_1$, a value $a_x(t_1)$ is acquisitioned and input to the analog/digital converter 50. As it can be seen in fig. 3b, at a moment $t_2$ corresponding to $t_1$ plus the time shift $\Delta t$, a value $a_y(t_2)$ is acquisitioned and also input to the analog/digital converter 50. Finally, the last value $a_z(t_3)$ will be acquisitioned at a moment $t_3$ corresponding to $t_2$ plus the time shift At.

Any value being calculated by the data processing means 60 using the three acceleration signals $a_x$, $a_y$, and $a_z$, will thus be afflicted with a systematic error. For the acceleration magnitude at the moment $t_3$ calculated using the formula given above, this error can be expressed as:

$$\Delta a_{magnitude}\left(t_3\right) = \sqrt{a_x\left(t_3\right)^2 + a_y\left(t_3\right)^2 + a_z\left(t_3\right)^2} - \sqrt{a_x\left(t_3 - 2\Delta t\right)^2 + a_y\left(t_3 - \Delta t\right)^2 + a_z\left(t_3\right)^2}$$

The aim of the present invention is thus to provide a device according to the preamble of claim 1 providing more reliable and accurate results without rendering the post-processing more complex.

This aim is achieved by the device according to claim 1 which comprises filtering means to filter a digital signal output by the analog/digital converter, said filtering means being adapted to compensate the error induced by the time shift between the output values being transmitted from the first and the second sensor, respectively.

According to a preferred embodiment of the invention, the sensor device is a tri-axial accelerometer, i.e. it comprises a third sensor measuring an acceleration along a third axis, the filtering means being adapted to compensate the error induced by the time shift between the output values being transmitted from the first, the second and the third sensor, respectively.

The filtering means can be designed as an optional module to be sold with a sensor device, which allows offering a range of different accelerometers for different applications at a low cost, for example by offering different filter modules which can all be used together with one particular accelerometer. The filtering means may also be provided with a switch to allow a deactivation of the filtering function. This can be useful for application where acceleration which vary only little over time are observed at a high sample rate, as in these cases the systematic error explained above can be neglected and the filtering means would thus not considerably improve the results but might slow down the data processing within the sensor device. Such a switch could be a manual switch which could for example be switched on or off by a manufacturer before mounting the sensor device according to the invention in a bigger unit such as a vehicle. Instead of a simple manual switch one can also provide an electronic circuit which switches the filtering means on and off automatically as a function of certain parameters such as a sampling rate, a previously measured variation of the acceleration magnitude, etc.

According to a preferred embodiment of the invention, the filtering means comprise an interpolation filter. Such a filter is particularly suitable to correct the error induced by sequential sampling.

The interpolation filter is preferably a finite impulse filter. Simulations have shown that satisfying results can be achieved with a 2nd order finite impulse response filter.

A preferred embodiment of a sensor device according to the present invention is illustrated in Fig. 2 and a detailed description will be given below. The embodiment shown in Fig. 2 and described herein is not limiting, however, and it should be understood that any variation which the man skilled in the art can imagine without departing from the scope of the present set of claims is also comprised within the invention.

The device shown in Fig. 2 comprises all components of the device as known from prior art described above referring to Fig. 1. The same components are denoted by the same reference numbers in Figs.1 and 2, respectively.

Just as in the device known from prior art, three sensors 10, 20, 30 measure an acceleration $a_x$, $a_y$ and $a_z$, respectively. Means 40 sequentially select an output value of either of these sensors 10, 20, 30 to be transmitted to the analog/digital converter 50. After the analog/digital conversion, the signals are not directly transmitted to data processing means 60, but are first filtered by suitable filtering means 70. The filtered signals which are output by these filtering means 70 can then be used by data processing means 60 for calculating an acceleration magnitude, a velocity magnitude and/or other values.

## Claims

1. A sensor device for measuring an acceleration along at least two axes (x, y) comprising

   - a first sensor (10) measuring an acceleration ($a_x$) along a first axis (x),
   - a second sensor (20) measuring an acceleration ($a_y$) along a second axis (y),
   - an analog/digital converter (50),
   - means for sequentially selecting an output value of either of these sensors (10, 20) to be transmitted to said analog/digital converter (50), and
   - data processing means (60) for calculating a desired output combining the output values provided by the sensors (10, 20),

   characterized in that it further comprises filtering means (70) which filter a digital signal output by the analog/digital converter (50), said filtering means (70) being adapted to eliminate the error induced by the time shift between the output values being transmitted from the first (10) and the second sensor (20), respectively.

2. The sensor device according to claim 1, **characterized in that** it further comprises a third sensor (30) measuring an acceleration ($a_z$) along a third axis (z), the filtering means (70) being adapted to eliminate the error induced by the time shift between the output values being transmitted from the first (10), the second (20) and the third sensor (30), respectively.

3. The sensor device according to claim 1 or 2, **characterized in that** the filtering means (70) constitute a separate optional module which can be added to the sensor device.

4. The sensor device according to any of the preceding claims, **characterized in that** the filtering means (70) can be deactivated.

5. The sensor device according to any of the preceding claims, **characterized in that** the filtering means (70) comprise an interpolation filter.

6. The sensor device according to claim 5, **characterized in that** the interpolation filter is a finite impulse filter, preferably a $2^{nd}$ order finite impulse response filter.

7. A method for measuring an acceleration magnitude comprising the following steps:

   - measuring an acceleration ($a_x$) along a first axis (x) using a first sensor (10),
   - measuring an acceleration ($a_y$) along a second axis (y) using a second sensor (20),
   - sequentially selecting an output signal of either of these sensors (10, 20) and transmitting said value to an analog/digital converter (50),
   - converting the selected output signals of said sensors (10, 20) into digital signals by means of said analog/digital converter (50), and
   - calculating an acceleration magnitude,

   **characterized in that** it further comprises the step of filtering a digital signal output by the analog/digital converter (50), such as to eliminate the error induced by the time shift between the output values being transmitted from the first (10) and the second sensor (20), respectively.

## Fig. 1
(PRIOR ART)

## Fig. 2

Fig. 3a

Fig. 3b

Fig. 3c

**European Patent Office**

## EUROPEAN SEARCH REPORT

Application Number

EP 08 15 2523

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 788 396 A (ASAHI KASEI EMD CORP [JP]) 23 May 2007 (2007-05-23) * paragraph [0096] - paragraph [0101] * * paragraph [0141] - paragraph [0142] * * paragraph [0292] - paragraph [0293] * * paragraph [0299] - paragraph [0302] * * figures 1,4,29,31 * | 1-7 | INV. G01P15/12 G01P15/125 G01P15/18 G01P21/00 |
| A | JP 2004 085562 A (MATSUSHITA ELECTRIC WORKS LTD) 18 March 2004 (2004-03-18) * the whole document * | 1-7 | |
| A | US 5 977 803 A (TSUGAI MASAHIRO [JP]) 2 November 1999 (1999-11-02) * column 7, line 20 - column 8, line 19 * * figure 5 * | 1-7 | |

TECHNICAL FIELDS SEARCHED (IPC)

G01P

The present search report has been drawn up for all claims

| Place of search | Date of completion of the search | Examiner |
|---|---|---|
| The Hague | 5 August 2008 | Reto, Davide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EP 2 101 180 A1

## ANNEX TO THE EUROPEAN SEARCH REPORT
## ON EUROPEAN PATENT APPLICATION NO.

EP 08 15 2523

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2008

| Patent document cited in search report | | Publication date | Patent family member(s) | | Publication date |
|---|---|---|---|---|---|
| EP 1788396 | A | 23-05-2007 | WO | 2006016671 A1 | 16-02-2006 |
| | | | KR | 20070044006 A | 26-04-2007 |
| | | | US | 2008033679 A1 | 07-02-2008 |
| JP 2004085562 | A | 18-03-2004 | NONE | | |
| US 5977803 | A | 02-11-1999 | DE | 19739532 A1 | 03-09-1998 |
| | | | JP | 3262013 B2 | 04-03-2002 |
| | | | JP | 10239196 A | 11-09-1998 |

EPO FORM P0459

For more details about this annex : see Official Journal of the European Patent Office, No. 12/82